# EUROPÄISCHE PATENTSCHRIFT

(11) **EP 1 038 805 B1**
(45) Veröffentlichungstag und Bekanntmachung des Hinweises auf die Patenterteilung: **19.12.2001**
(21) Anmeldenummer: 99104732.5
(22) Anmeldetag: 10.03.1999
(51) Int. Cl.: B65G 21/20, B65G 15/58

(54) **Vorrichtung zum Transport von Werkstücken, insbesondere von aufliegenden, tafelförmigen Werkstücken wie Blechen oder Platten**
Device for the transport of workpieces, especially of supported tubular workpieces like iron sheets or plates
Dispositif pour le transport de pièces d'oeuvre, notamment de pièces supportés tabulaires comme des tôles ou des discs

(43) Veröffentlichungstag der Anmeldung: 27.09.2000
(73) Patentinhaber: Neuhäuser GmbH, 44532 Lünen (DE)
(72) Erfinder: Janzen, Klaus, 44534 Lünen (DE)
(74) Vertreter: Nunnenkamp, Jörg, Dr.

(56) Entgegenhaltungen:
- EP-A- 0 893 372
- WO-A-97/38927
- DE-A- 19 614 742

## Beschreibung

Die Erfindung betrifft eine Vorrichtung zum Transport von Werkstücken, insbesondere von aufliegenden, tafelförmigen Werkstücken wie Blechen oder Platten, mit zumindest einem umlaufend angetriebenen Fördergurt für die hieran anzulegenden bzw. aufzulegenden Werkstücke, und mit einer Haltevorrichtung, an welcher der Fördergurt vorbeigeführt wird, wobei die Haltevorrichtung die Werkstücke mittels eines den Fördergurt durchdringenden Magnetfeldes und/oder durch Erzeugen von Unterdruck an Ansaugöffnungen des Fördergurtes am Fördergurt werkstückseitig festhält, und wobei zur Abdichtung des Fördergurtes zumindest eine Dichtlippe vorgesehen ist.

Solche Vorrichtungen sind aus den Dokumenten EP-A-0 893 372, DE-A-19 614 742 und WO 97/38927 bekannt.

Bei einer Vorrichtung der eingangs beschriebenen Ausgestaltung wird regelmäßig so vorgegangen, daß die zumindest eine Dichtlippe direkt an den Fördergurt angeformt ist. Im allgemeinen sind zwei Dichtlippen vorgesehen, welche so gestaltet sind, daß sie eine Führungsleiste mit rinnenförmigem Ansaugkanal dicht umschließen. Auf diese Weise soll der vorgenannte rinnenförmige Ansaugkanal der betreffenden Führungsleiste mit Ausnahme von Saugöffnungen abgedichtet werden.

Die bekannte Vorgehensweise setzt einen relativ kompliziert zu fertigenden Fördergurt voraus. Außerdem wirken sich Bewegungen des Fördergurtes mit den daran angeformten Dichtlippen direkt auf dessen Abdichteigenschaften aus (vgl. WO 97/38 927, EP-A-0 827 918, EP-A-0 827 920 sowie DE-PS 196 14 742).

Der Erfindung liegt das technische Problem zugrunde, eine Vorrichtung zum Transport von Werkstücken, insbesondere von aufliegenden, tafelförmigen Werkstücken wie Blechen oder Platten, so weiter zu bilden, daß eine einwandfreie Abdichtung des Fördergurtes auf einfache und insbesondere preisgünstige Art und Weise erfolgt.

Zur Lösung dieses technischen Problems schlägt die Erfindung bei einer Vorrichtung zum Transport von Werkstücken des eingangs beschriebenen Aufbaus vor, daß die Dichtlippe - getrennt vom Fördergurt - in die Haltevorrichtung integriert ist und am Fördergurt vorrichtungsseitig anliegt. Folglich ist die Dichtlippe der den Werkstücken abgewandten Seite des Fördergurtes zugeordnet, und zwar integriert in die Haltevorrichtung und unabhängig vom Fördergurt (im Gegensatz zum Stand der Technik, welcher eine an den Fördergurt angeformte Dichtlippe lehrt). Neben einem aufliegenden Transport der Werkstücke ist selbstverständlich auch ein hängender Transport möglich.

Zur problemlosen Anbringung der Dichtlippe an der Haltevorrichtung kann diese (die Haltevorrichtung) zumindest eine Lippennut in Längserstreckung aufweisen. Hierin wird die üblicherweise longitudinal ausgeführte Dichtlippe verankert. Dieses kann dergestalt erfolgen, daß die Dichtlippe in die Lippennut rastend eingelegt wird. Selbstverständlich ist auch eine Klebefixierung denkbar. Jedenfalls weist die Dichtlippe im allgemeinen eine in die Lippennut eingreifende Lippenbasis auf, welche für die zuverlässige Verankerung sorgt. Diese Lippenbasis kann einen darauf aufstehenden, schräggestellten Dichtzahn aufweisen, welcher die eigentliche Dichtfunktion übernimmt. Denn dieser Dichtzahn legt sich an die der Haltevorrichtung zugewandte Seite des Fördergurtes - also vorrichtungsseitig - an den Fördergurt an.

Nach vorteilhafter Ausgestaltung sind zwei Lippennuten mit zugehörigen Dichtlippen vorgesehen, welche beide jeweils spiegelsymmetrisch im Vergleich zu wenigstens einer dazwischen befindlichen Saugbohrung bzw. eines Ansaugkanales angeordnet sind. Diese Saugbohrung bzw. der Ansaugkanal befindet sich im allgemeinen in der zugehörigen Spiegelebene.

Die Haltevorrichtung kann im Querschnitt ein doppelt-U-förmiges Profil mit einem Mittelsteg zur Aufnahme der Dichtlippe und der Saugbohrung bzw. des Ansaugkanales und zwei beidseitig des Mittelsteges angeordnete U-Schenkel aufweisen. Der Mittelsteg mit zumindest einer Saugbohrung bzw. zugehörigem Ansaugkanal dient dabei zur Unterdruckbeaufschlagung der Werkstücke. Demgegenüber weisen die hiervon getrennten U-Schenkel stirnseitig jeweils eine Magnetvorrichtung zur Magnetfeldbeaufschlagung der Werkstücke auf. Mit anderen Worten sind Unterdruckbeaufschlagung und Magnetfeldbeaufschlagung räumlich und funktionell voneinander getrennt, so daß bewußt auf ein kombiniertes Vakuum-Magnet-System nicht zurückgegriffen wird, wie es in der WO 97/38 927 und der EP-A-0 827 920 sowie der DE-PS 196 14 742 beschrieben ist. Demzufolge ist vorliegend die Saugbohrung auch getrennt von der Magnetvorrichtung ausgeführt, durchdringt diese insbesondere nicht.

Infolge dieser Ausgestaltung ist es erforderlich, auf mindestens eine, vorteilhaft zwei Magnetvorrichtungen in jedem der beiden U-Schenkel zurückzugreifen. Dies ist zwar gegenüber dem Stand der Technik vorrichtungsmäßig etwas aufwendiger, dafür entfällt jedoch die die Magnetvorrichtung zwangsläufig durchdringende Saugbohrung bei einem kombinierten Vakuum-Magnet-System. Hierdurch kann die Saugbohrung - unabhängig von den beiden Magnetvorrichtungen - flexibel an die jeweiligen Gegebenheiten, insbesondere den zu erzeugenden Unterdruck, angepaßt werden. Dies gilt auch für die Magnetvorrichtungen, welche im allgemeinen austauschbar gestaltet sind, beispielsweise zusammen mit den beiden U-Schenkeln an eine Basis der Haltevorrichtung angeschraubt werden können. Dementsprechend gelingt es, die erforderliche Magnetfeldstärke praktisch beliebig einstellen zu können.

Außerdem wird durch die stirnseitige bzw. kopfseitige Anbringung der beiden Magnetvorrichtungen im Vergleich zu den zugehörigen U-Schenkeln der Einsatz von Polleisten mit Nuten überflüssig, wie sie die DE-PS 196 14 742 als unabdingbar ansieht. Vielmehr gestattet die erfindungsgemäße Ausgestaltung der Haltevorrichtung mit den exponiert angeordneten Magnetvorrichtungen eine automatische Anpassung an den Fördergurt, ohne daß auf Zusatzeinrichtungen zur Führung des Fördergurtes zurückgegriffen werden muß.

Damit der Fördergurt die anzulegenden Werkstücke einwandfrei aufnimmt, insbesondere praktisch verzögerungsfrei beschleunigen kann, weist der Fördergurt werkstückseitig längsrandseitige Werkstückauflagen mit Schrägen aus insbesondere Polyurethan (PU), vorzugsweise mit einer Shore-A-Härte von ca. 55, auf. Diese Werkstückauflagen bedingen durch ihre weiche Konsistenz eine einwandfreie Anpassung an die Oberfläche der aufzunehmenden Werkstücke, die dementsprechend einwandfrei ergriffen werden. Selbst Aussparungen, Ecken, Kanten oder Spitzen an den Werkstücken behindern ein sicheres Aufnehmen und Beschleunigen auf Fördergurtendgeschwindigkeit nicht. Hierfür sorgen die längsrandseitig der Werkstückauflagen vorgesehenen Abschrägungen bzw. Schrägen, die keine Angriffsfläche für die üblicherweise transportierten Platten bieten.

Um eine einwandfreie Anlage und Abdichtung des Fördergurtes gegenüber den Dichtlippen zu erreichen, weist der Fördergurt vorrichtungsseitig eine an den Dichtlippen und dem Mittelsteg vorbeigeführte Dichtauflage aus ebenfalls Polyurethan mit hoher Shorehärte, insbesondere einer Shore-A-Härte von z.B. 90 bis 95, auf. Sogar Stahlband ist an dieser Stelle denkbar. Der Grundriemen des Fördergurtes ist ebenfalls im allgemeinen hart ausgeführt, besitzt typischerweise eine Shore-A-Härte von ca. 90.

Die Werkstückauflagen bilden vorzugsweise kreisförmige Saugeinformungen, die letztlich die Werkstücke festhalten. Die vorgenannten Saugeinformungen kommunizieren mit den Ansaugöffnungen des Fördergurtes, werden folglich über die Ansaugöffnungen und den Ansaugkanal bzw. die Saugbohrungen in der Haltevorrichtung mit Unterdruck beaufschlagt.

Damit die Haltevorrichtung bzw. der Fördergurt die einzelnen Werkstücke zielgenau aufnehmen und abwerfen kann, ist sie größtenteils aus wahlweise schaltbaren Haltemodulen zusammengesetzt. Diese Haltemodule lassen sich gleichsam ein- und ausschalten. Ein Abwurf erfolgt dabei regelmäßig in der Weise, daß die Saugeinformungen mit Überdruck - statt mit Unterdruck - beaufschlagt werden. Dies gilt auch für den Fall, daß eine Magnetförderung erfolgt, da es sich bei den Magnetvorrichtungen regelmäßig um Neodym-Eisen-Bor-Permamentmagnete handelt. Selbstverständlich sind an dieser Stelle auch Elektromagnete - zusätzlich oder alternativ - denkbar. Außerdem kann hier auf Hybrid-Kompensationsmagnetsysteme zurückgegriffen werden, wie sie grundsätzlich in der DE-PS 197 24 634 beschrieben werden, auf welche ausdrücklich Bezug genommen sei.

Im folgenden wird die Erfindung anhand einer lediglich ein Ausführungsbeispiel darstellenden Zeichnung näher erläutert; es zeigen:
- Fig. 1: einen Schnitt durch eine erfindungsgemäße Vorrichtung mit zugehörigem Fördergurt und
- Fig. 2: eine Aufsicht auf den Fördergurt.

In den Figuren ist eine Vorrichtung zum Transport von Werkstücken W, nach dem Ausführungsbeispiel von aufliegenden, tafelförmigen Werkstücken W wie Blechen oder Platten gezeigt. Selbstverständlich ist grundsätzlich auch ein hängender Transport dieser Werkstücke W mit Hilfe der dargestellten Vorrichtung möglich. Zum grundsätzlichen Aufbau gehören zumindest ein umlaufend angetriebener Fördergurt 1 für die hieran anzulegenden Werkstücke W und eine Haltevorrichtung 2, an welcher der Fördergurt 1 vorbeigeführt wird. Die Haltevorrichtung 2 vermag die Werkstücke W mittels eines den Fördergurt 1 durchdringenden Magnetfeldes und/oder durch Erzeugen von Unterdruck an Ansaugöffnungen 3 des Fördergurtes 1 am Fördergurt 1 werkstückseitig, d.h., an der der Haltevorrichtung 2 gegenüberliegenden Seite des Fördergurtes 1, festzuhalten. Schließlich finden sich zwei Dichtlippen 4 zur Abdichtung des Fördergurtes 1. Beide Dichtlippen 4 sind in die Haltevorrichtung 2 integriert, wie nachfolgend im Detail noch erläutert wird und liegen am Fördergurt 1 vorrichtungsseitig an, d.h., an der der Haltevorrichtung 2 zugewandten Seite des Fördergurtes 1.

Zur Aufnahme der Dichtlippen 4 weist die Haltevorrichtung 2 Lippennuten 5 in Längserstreckung auf. Bei den Dichtlippen 4 handelt es sich um longitudinale Dichtstränge, welche in den beiden Lippennuten 5 verankert werden. Derartige longitudinale Dichtlippen 4 bzw. Dichtstränge sind als fertig konfektionierte Meterware erhältlich und dementsprechend preisgünstig.

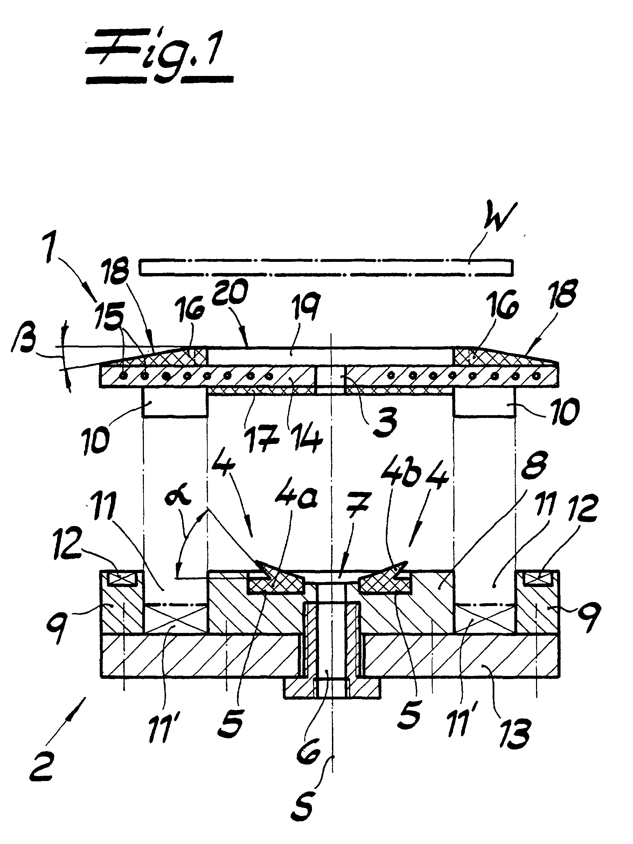

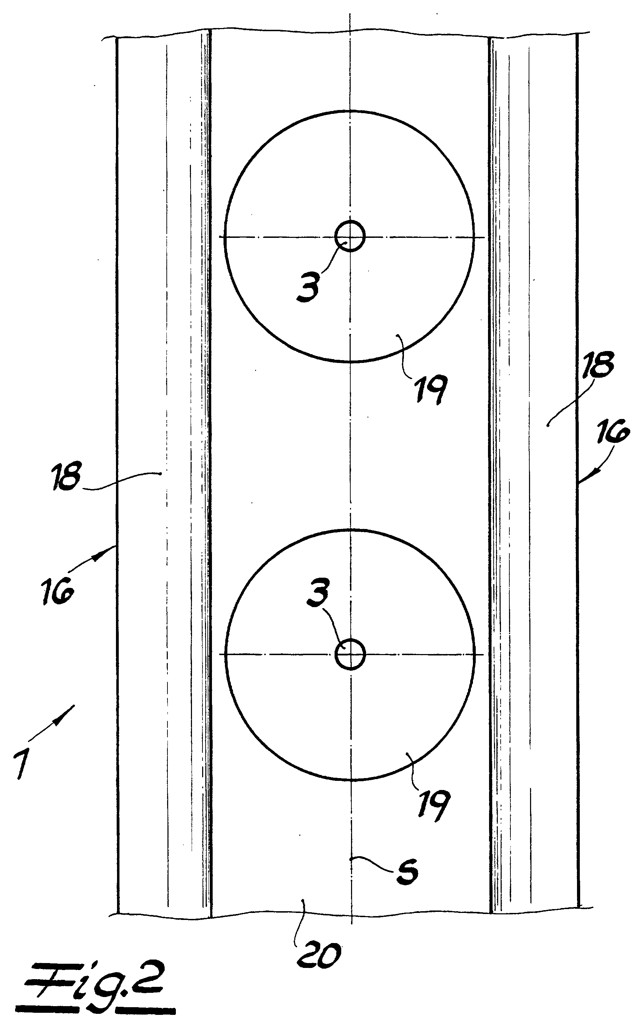

Der Fördergurt 1 ist mit Blick auf die Ansaugöffnungen 3 spiegelsymmetrisch im Vergleich zu einer durch die Ansaugöffnungen 3 definierten Spiegelebene S ausgeführt (vgl. Fig. 1). In der gleichen Spiegelebene S finden sich auch Saugbohrungen 6 bzw. ein längserstreckter Ansaugkanal 7 in der Haltevorrichtung 2 (vgl. Fig. 2). Diese Saugbohrungen 6 sind untereinander mittels des Ansaugkanales 7 verbunden, so daß an den Ansaugöffnungen 3 des Fördergurtes 1 immer der gewünschte Unterdruck anliegt.

Zur Verankerung der Dichtlippen 4 weisen diese eine in die Lippennut 5 eingreifende Lippenbasis 4a mit darauf aufstehendem schräggestellten Dichtzahn 4b auf. Anhand der Fig. 1 erkennt man, daß die Haltevorrichtung 2 im Querschnitt ein doppelt-U-förmiges Profil mit einem Mittelsteg 8 und zwei beidseitig des Mittelsteges 8 angeordneten U-Schenkeln 9 besitzt. Die Haltevorrichtung 2 ist - wie der Fördergurt 1 - spiegelsymmetrisch zur Spiegelebene S ausgeführt.

Der vorgenannte Dichtzahn 4b der Dichtlippe 4 kragt jeweils aus der Lippennut 5 hervor und steht über eine entsprechende Oberkante des Mittelsteges 8 vor. Hierdurch wird erreicht, daß sich die beiden Dichtzähne 4b einwandfrei an die Unterseite des Fördergurtes 1 anlegen, welcher mit Zahnflanken 10 jeweils zwischen die U-Schenkel 9 und den Mittelsteg 8 eingreift. Mit Hilfe der Zahnflanken 10 erfolgt der Antrieb des Fördergurtes 1 über ein entsprechend gestaltetes Zahnrad. Mit anderen Worten ist der Fördergurt 1 als Zahnriemen ausgeführt. Selbstverständlich kann es sich auch um einen Flachriemen handeln, wie nachfolgend noch erläutert wird. - Jedenfalls wird durch die Schrägstellung der Dichtzähne 4b, die einen Winkel α zur Lippenbasis 4a von ca. 20° bis 50° aufweisen, eine einwandfreie Abdichtung des mit den Zahnflanken 10 in zugehörigen Ausnehmungen 11 geführten Fördergurtes 1 an der Haltevorrichtung 2 erreicht. Die Tiefe dieser Ausnehmungen 11 kann dabei mittels eingeschraubter Leisten 11' variiert werden. Anstelle der Leisten 11' können hier auch Spulen zum Aufbau einer nachfolgend noch näher erläuterten Magnetvorrichtung 12 angeordnet sein.

Der vorerwähnte Mittelsteg 8 dient gleichsam zur Unterdruckbeaufschlagung der Werkstücke W, und zwar dergestalt, daß die Saugbohrung 6 mit einer entsprechenden Unterdruckquelle verbunden wird, die im einzelnen zeichnerisch nicht dargestellt ist. Bei dieser Unterdruckquelle kann es sich um einen Ejektor, ein Vakuumgebläse oder eine Vakuumpumpe handeln, wie dies grundsätzlich in der europäischen Patentanmeldung 0 893 372 beschrieben ist, auf welche ausdrücklich Bezug genommen sei. Im übrigen ist auch die Verwirklichung von Vakuumbegrenzungsventilen denkbar, wie sie in der vorgenannten Anmeldung erwähnt sind. Die Vakuumbegrenzungsventile dienen dazu, den sich in den Unterdruckzuleitungen zwangsläufig einstellenden Unterdruck zu begrenzen. Derartiges ist dann erforderlich, wenn durch an den Fördergurt 1 angelegte Werkstücke W eine Vielzahl von Ansaugöffnungen 3 gleichzeitig verschlossen ist. Würde der erzeugte Unterdruck in einem solchen Fall nicht begrenzt, bestände die Gefahr, daß der Fördergurt 1 zu stark angesaugt und damit abgebremst wird.

Die beiden U-Schenkel 9 weisen jeweils eine Magnetvorrichtung 12 auf. Bei dieser Magnetvorrichtung 12 handelt es sich um kopfseitig der U-Schenkel 9 angebrachte Permanentmagnete, nach dem Ausführungsbeispiel aus Neodym-Eisen-Bor. Der jeweilige U-Schenkel 9 ist demgegenüber aus Messing oder Stahl gefertigt. Dies gilt auch für den Mittelsteg 8.

Sowohl der Mittelsteg 8 als auch die beiden U-Schenkel 9 sind an eine Basisplatte 13 der Haltevorrichtung 2 angeschraubt, so daß ein flexibler Austausch möglich ist. Dies ist nicht nur bei Reparaturen von Bedeutung. Vielmehr läßt sich hierdurch auch eine flexible Anpassung an die zu transportierenden Werkstücke W erreichen. Denn die Größe der Saugbohrung 6 läßt sich über einen Austausch des Mittelsteges 8 genauso variieren wie die Stärke des Magnetfeldes durch einen entsprechenden Ersatz der Magnetvorrichtungen bzw. Permanentmagnete 12.

Bei dem Fördergurt 1 handelt es sich um ein lediglich geringfügig modifiziertes Großserienteil, namentlich einen Flachriemen mit oder ohne Zähne. Zu diesem Zweck sind auf einen Grundkörper 14 des Fördergurtes 1 mit eingebrachten Stahllitzen 15 zu dessen Stabilisierung Auflagen 16, 17 und 20 aufgebracht. Bei diesen Auflagen 16, 17 und 20 handelt es sich zum einen um zwei beidseitig der Ansaugöffnungen 3 angeordnete Werkstückauflagen 16, welche sich auf der Oberseite des Fördergurtes 1 - also werkstückseitig - an dessen Längsrändern erstrecken. Zusätzlich ist hier eine Werkstückauflage 20 vorgesehen, welche den mittleren Bereich bzw. Mittelstreifen des Fördergurtes 1 abdeckt und vorliegend Saugeinformungen 19 definiert. Selbstverständlich können die Saugeinformungen 19 auch durch die Werkstückauflagen 16 gebildet werden, und zwar für den Fall, daß Werkstückauflagen 16 und Werkstückauflagen 20 gleichsam einstückig ausgeführt sind.

Jedenfalls weisen die Werkstückauflagen 16 längsrandseitige Schrägen 18 auf. Der von den vorgenannten Schrägen 18 eingeschlossene Winkel β beträgt ca. 5° bis 10°. Sie, d.h. die Werkstückauflagen 16, dienen dazu, eine einwandfreie Aufnahme der Werkstücke W zu ermöglichen, wie eingangs bereits dargestellt wurde.

Neben diesen beiden abgeschrägten Werkstückauflagen 16 und der Werkstückauflage 20 aus jeweils Polyurethan findet sich zum anderen am Fördergurt 1 vorrichtungsseitig eine an den Dichtlippen 4 und dem Mittelsteg 8 vorbeigeführte Dichtauflage 17. Diese ist ebenfalls aus Polyurethan gefertigt. Bei den Auflagen 16, 17 und 20 handelt es sich um jeweils aufgeklebte bzw. eingeklebte Polyurethanstreifen. Diese können zum einen Shore-A-Härte von ca. 55 aufweisen (Auflagen 16 und 20) bzw. härter ausgeführt sein mit Shore-A-Härten im Bereich von ca. 90 bis 95 (Auflage 17). Der Grundkörper 14 des Fördergurtes 1 besitzt eine Shore-A-Härte von ca. 90.

Anhand der Fig. 2 erkennt man, daß die beiden längsrandseitig des Fördergurtes 1 vorgesehenen Werkstückauflagen 16 zusammen mit der Werkstückauflage 20 nach dem Ausführungsbeispiel einstückig ausgeführt sind und die kreisförmigen Saugeinformungen 19 definieren. Diese Saugeinformungen 19 kommunizieren mit den Ansaugöffnungen 3, welche mit dem längserstreckten Ansaugkanal 7 und schließlich den Saugbohrungen 6 zur Unterdruckbeaufschlagung in Verbindung stehen.

Die gesamte, dargestellte Haltevorrichtung 2 ist aus wahlweise schaltbaren Haltemodulen zusammengesetzt. Dabei sind die Ansaugöffnungen 3 im Fördergurt 1 üblicherweise so bemessen, daß deren Durchmesser größer ist als der Abstand der jeweiligen Module untereinander, so daß immer eine Unterdruckbeaufschlagung der zugehörigen kreisförmigen Saugeinformungen 19 gewährleistet ist, wie dies grundsätzlich in der zuvor bereits angeführten EP-A-0 893 372 beschrieben wurde.

Die gesamte Haltevorrichtung 2 zusammen mit dem Fördergurt 1 kann an nicht dargestellten Teleskopen befestigt werden, um eine Linearverschiebung in Abhängigkeit vom jeweiligen Aufnahmepunkt der Werkstücke W zu ermöglichen. Es sollte betont werden, daß die Werkstücke W sowohl über magnetische Kräfte (erzeugt mittels der Permanentmagnete 12) als auch durch Unterdruckkräfte alternativ oder additiv festgehalten werden können.

Immer wird bei frappierend einfachem Aufbau eine einwandfreie Beschleunigung der Werkstücke W auf Fördergurt(end)geschwindigkeit ermöglicht, und zwar innerhalb eines äußerst kurzen Zeitraumes. Durch die in die Haltevorrichtung 2 integrierten Dichtlippen 4 kann auf einen einfach und preisgünstig gestalteten Fördergurt 1 zurückgegriffen werden. Im übrigen gelingt ein Austausch dieser Dichtlippen 4 - ohne daß der Fördergurt 1 im ganzen erneuert werden müßte. - Sofern ein hängender Transport gewünscht wird, empfiehlt es sich, den Fördergurt 1 mittels an den U-Schenkeln 9 angebrachter (Messing-)Winkel jeweils längsrandseitig zu führen und festzuhalten. Auch ist es denkbar, zumindest einen zusätzlichen, mitlaufenden Schutzgurt dem Fördergurt 1 zuzuordnen, wie dies grundsätzlich in der EP-Anmeldung 98 121 769.8 beschrieben wird.

## Patentansprüche

1. Vorrichtung zum Transport von Werkstücken (W), insbesondere von aufliegenden, tafelförmigen Werkstücken (W) wie Blechen oder Platten, mit zumindest einem umlaufend angetriebenen Fördergurt (1) für die hieran anzulegenden Werkstücke (W), und mit einer Haltevorrichtung (2), an welcher der Fördergurt (1) vorbeigeführt wird, wobei die Haltevorrichtung (2) die Werkstücke (W) mittels eines den Fördergurt (1) durchdringenden Magnetfeldes und/oder durch Erzeugen von Unterdruck an Ansaugöffnungen (3) des Fördergurtes (1) am Fördergurt (1) werkstückseitig festhält, und wobei zur Abdichtung des Fördergurtes (1) zumindest eine Dichtlippe (4) vorgesehen ist, **dadurch gekennzeichnet, daß** die Dichtlippe (4) in die Haltevorrichtung (2) integriert ist und am Fördergurt (1) vorrichtungsseitig anliegt.

2. Vorrichtung nach Anspruch 1, **dadurch gekennzeichnet, daß** die Haltevorrichtung (2) zumindest eine Lippennut (5) in Längserstreckung zur Aufnahme der longitudinal ausgeführten Dichtlippe (4) aufweist.

3. Vorrichtung nach Anspruch 1 oder 2, **dadurch gekennzeichnet, daß** die Dichtlippe (4) eine in die Lippennut (5) eingreifende Lippenbasis (4a) mit darauf aufstehendem, schräggestellten Dichtzahn (4b) aufweist.

4. Vorrichtung nach einem der Ansprüche 1 bis 3, **dadurch gekennzeichnet, daß** zwei Lippennuten (5) mit zugehörigen Dichtlippen (4) vorgesehen sind, welche beide jeweils spiegelsymmetrisch im Vergleich zu wenigstens einer dazwischen in Spiegelebene (S) befindlichen Saugbohrung (6) bzw. eines Ansaugkanales (7) angeordnet sind.

5. Vorrichtung nach einem der Ansprüche 1 bis 4, **dadurch gekennzeichnet, daß** die Haltevorrichtung (2) im Querschnitt ein doppelt-U-förmiges Profil mit einem Mittelsteg (8) für die Aufnahme der Dichtlippen (4) und der Saugbohrung (6) bzw. des Ansaugkanales (7) zur Unterdruckbeaufschlagung der Werkstücke (W) und zwei beidseitig des Mittelsteges (8) angeordnete U-Schenkel (9) für die hiervon getrennte Aufnahme zumindest einer, vorzugsweise jeweils einer Magnetvorrichtung (12) zur Magnetfeldbeaufschlagung der Werkstücke (W) aufweist.

6. Vorrichtung nach einem der Ansprüche 1 bis 5, **dadurch gekennzeichnet, daß** der Fördergurt (1) vorrichtungsseitig eine an den Dichtlippen (4) und dem Mittelsteg (8) vorbeigeführte Dichtauflage (17) aus insbesondere Polyurethan (PU) mit großer Shore-A-Härte oder ein eingelassenes Stahlband an dieser Stelle aufweist.

7. Vorrichtung nach einem der Ansprüche 1 bis 6, **dadurch gekennzeichnet, daß** der Fördergurt (1) werkstückseitig längsrandseitige Werkstückauflagen (16) mit Schrägen (18) aus insbesondere Polyurethan (PU) mit geringer Shore-A-Härte aufweist.

8. Vorrichtung nach einem der Ansprüche 1 bis 7, **dadurch gekennzeichnet, daß** die Werkstückauflagen (16) vorzugsweise kreisförmige Saugeinformungen (19) bilden, welche mit den Ansaugöffnungen (3) des Fördergurtes (1) kommunizieren.

## Claims

1. A device for transporting workpieces (W), particularly supported workpieces (W) in panel form, such as sheets or plates, comprising at least one conveyor belt (1) for the workpieces (W) to be deposited thereon, said conveyor belt (1) being driven so as to revolve, and with a retaining device (2), past which the conveyor belt (1) is taken, the retaining device (2) holding the workpieces (W) fast on the conveyor belt (1) on the workpiece side by means of a magnetic field permeating the conveyor belt (1) and/or by generating a negative pressure at suction openings (3) in the conveyor belt (1), and at least one sealing lip (4) being provided to seal the conveyor belt (1), **characterised in that** the sealing lip (4) is integrated in the retaining device (2) and abuts the conveyor belt (1) on the device side.

2. A device according to claim 1, **characterised in that** the retaining device (2) has at least one lip groove (5) extending longitudinally to receive the longitudinally constructed sealing lip (4).

3. A device according to claim 1 or 2, **characterised in that** the sealing lip (4) has a lip base (4a) engaging in the lip groove (5) and having an inclined sealing tooth (4b) standing thereon.

4. A device according to any one of claims 1 to 3, **characterised in that** two lip grooves (5) are provided with associated sealing lips (4) and are both disposed in each case with mirror symmetry in comparison to at least one suction bore (6) or a suction duct (7) disposed therebetween in the mirror plane (S).

5. A device according to any one of claims 1 to 4, **characterised in that** the retaining device (2) has in cross-section a double-U-shaped profile with a central web (8) to receive the sealing lips (4) and the suction bore (6) or suction duct (7) for applying negative pressure to the workpieces (W) and two U-limbs (9) disposed on either side of the central web (8) for the accommodation, separately thereof, of at least one, preferably respectively in each case a magnetic device (12) for applying a magnetic field to the workpieces (W).

6. A device according to any one of claims 1 to 5, **characterised in that** the conveyor belt (1) has on the device side a sealing layer (17), particularly of polyurethane (PU) of high Shore-A hardness or an embedded steel strip at that place, said sealing layer (17) being taken past the sealing lips (4) and the central web (8).

7. A device according to any one of claims 1 to 6, **characterised in that** the conveyor belt (1) has on the workpiece side workpiece supports (16) at the longitudinal edges with bevels (18), particularly of polyurethane (PU) with low Shore-A hardness.

8. A device according to any one of claims 1 to 7, **characterised in that** the workpiece supports (16) preferably form circular suction configurations (19) which communicate with the suction openings (3) in the conveyor belt (1).

## Revendications

1. Dispositif pour le transport de pièces (W), en particulier de pièces (W) en forme de panneaux, reposant à plat, telles que des tôles ou des plaques, comprenant au moins une bande transporteuse (1) entraînée en continu pour les pièces (W) chargées sur celle-ci et un dispositif de retenue (2) le long duquel circule la bande transporteuse (1), le dispositif de retenue (2) maintenant fermement les pièces (W) sur la bande transporteuse (1), côté pièces, au moyen d'un champ magnétique traversant la bande transporteuse (1) et/ou par création d'une dépression au niveau d'ouvertures d'aspiration (3) de la bande transporteuse (1), au moins une lèvre d'étanchéité (4) étant prévue pour assurer l'étanchéité de la bande transporteuse (1), **caractérisé en ce que** la lèvre d'étanchéité (4) est intégrée dans le dispositif de retenue (2) et est appliquée contre la bande transporteuse (1), côté dispositif.

2. Dispositif selon la revendication 1, **caractérisé en ce que** le dispositif de retenue (2) comporte au moins une rainure à lèvre (5) longitudinale destinée à recevoir la lèvre d'étanchéité (4) longitudinale.

3. Dispositif selon la revendication 1 ou 2, **caractérisé en ce que** la lèvre d'étanchéité (4) comporte une base (4a) qui s'engage dans la rainure (5) et sur ladite base, une dent d'étanchéité (4b) inclinée.

4. Dispositif selon une des revendications 1 à 3, **caractérisé en ce qu'**il est prévu deux rainures (5) avec des lèvres d'étanchéité (4) associées, qui sont disposées symétriquement par rapport à au moins un trou d'aspiration (6) ou un canal d'aspiration (7) disposé entre deux, dans le plan de symétrie (S).

5. Dispositif selon une des revendications 1 à 4, **caractérisé en ce que** le dispositif de retenue (2) présente en section transversale un profil en forme de double U, avec une cloison médiane (8) recevant les lèvres d'étanchéité (4) et le trou d'aspiration (6) ou le canal d'aspiration (7), pour appliquer une dépression à la pièce (W), et deux ailes de U (9) de part et d'autre de la cloison médiane (8), pour recevoir séparément au moins, de préférence chacune, un dispositif magnétique (12) permettant d'appliquer un champ magnétique à la pièce (W).

6. Dispositif selon une des revendications 1 à 5, **caractérisé en ce que** la bande transporteuse (1), côté dispositif, présente une garniture d'étanchéité (17), notamment en polyuréthane (PU) à dureté Shore A élevée, ou un ruban d'acier intégré, qui se déplace devant les lèvres d'étanchéité (4) et la cloison médiane (8).

7. Dispositif selon une des revendications 1 à 6, **caractérisé en ce que** la bande transporteuse (1), côté pièce, présente des appuis de pièce (16) latéraux avec des surfaces inclinées, notamment en polyuréthane (PU) à faible dureté Shore A.

8. Dispositif selon une des revendications 1 à 7, **caractérisé en ce que** les appuis de pièce (16) latéraux forment de préférence des cavités d'aspiration circulaires (19) qui communiquent avec les ouvertures d'aspiration (3) de la bande transporteuse (1).
